# FASCICULE DE BREVET EUROPEEN

(11) **EP 3 865 367 B1**
(45) Date de publication et mention de la délivrance du brevet: **22.06.2022**
(21) Numéro de dépôt: 21157061.9
(22) Date de dépôt: 15.02.2021
(51) Int. Cl.: B61D 17/10, B62D 31/02

(54) **PLOT DE NIVELLEMENT DE PLANCHER DE VÉHICULE, NOTAMMENT FERROVIAIRE, PLANCHER DE VÉHICULE ET CAISSE DE VÉHICULE COMPRENANT UN TEL PLOT**
NIVELLIERBLOCK FÜR EINEN FAHRZEUGBODEN, INSBESONDERE EINES SCHIENENFAHRZEUGS, FAHRZEUGBODEN UND -KAROSSERIE MIT EINEM SOLCHEN BLOCK
PAD FOR LEVELLING THE FLOOR OF A VEHICLE, IN PARTICULAR A RAILWAY VEHICLE, VEHICLE FLOOR AND VEHICLE BODY COMPRISING SUCH A PAD

(30) Priorité: 17.02.2020 FR 2001530
(43) Date de publication de la demande: 18.08.2021
(73) Titulaire: SpeedInnov, 75008 Paris (FR)
(72) Inventeur: COURCIMEAUX, Eric, 17139 Dompierre sur Mer (FR)
(74) Mandataire: Lavoix

(56) Documents cités:
- WO-A1-00/76822
- WO-A1-2011/160755

## Description

La présente invention concerne un plot de nivellement pour plancher de véhicule, notamment ferroviaire, ainsi qu'un plancher de véhicule et une caisse de véhicule comprenant un tel plot de nivellement.

En général, les caisses de véhicules ferroviaires sont formées par l'assemblage de profilés, de préférence métalliques, soudés les uns aux autres. Malgré l'attention porté lors de la fabrication des profilés et de leur assemblage, les caisses de véhicules ferroviaires présentent un certain gauchissement, c'est-à-dire des écarts de géométrie par rapport aux pièces définies lors de leur conception. En particulier, le fond de la caisse, qui définit théoriquement une surface plane, est en réalité déformé, souvent bombé.

Pour offrir au passager un certain niveau de confort, un plancher est monté sur le fond, à l'intérieur de la caisse, pour rattraper les défauts géométriques de la caisse et offrir au passager un plancher parfaitement plat et présentant un meilleur aspect.

Pour plus de confort, le plancher est « découplé » de la caisse, c'est-à-dire que le plancher est relié à la caisse par l'intermédiaire d'éléments qui absorbent les vibrations.

Il est connu de WO-2011/160755 de réaliser des plots de nivellement, qui permettent conjointement de rattraper les défauts géométriques de la caisse et de découpler le plancher de la caisse au moyen d'éléments absorbants en élastomère. Chacun des plots de nivellement comporte une embase, qui doit être positionnée et collée sur le fond de la caisse de véhicule, la mise en place du plancher devant attendre que la colle soit polymérisée, ce qui est une source de perte de temps. D'autre part, la colle est utilisée en quantités importantes pour chaque caisse et est susceptible de dégager des composés organiques volatils, dits aussi « COV », ce qui n'est plus acceptable au regard des contraintes environnementales rencontrées aujourd'hui.

C'est à ces inconvénients qu'entend plus particulièrement remédier l'invention, en proposant un nouveau plot de nivellement de plancher de véhicule, notamment ferroviaire, qui permet un montage rapide du plancher sans avoir à positionner ou coller sur la caisse les embases des plots de nivellement.

À cet effet, l'invention concerne un plot de nivellement pour plancher de véhicule, notamment ferroviaire, le plot de nivellement comprenant une embase et une tige de réglage. L'embase comprend un bloc élastique, réalisé en un matériau absorbeur de vibrations, et un écrou, solidaire du bloc élastique. Le bloc élastique sépare l'écrou de la caisse et définit un axe de réglage du plot de nivellement. La tige de réglage comprend une extrémité inférieure et une extrémité supérieure, séparées par un collet intermédiaire ménagé en saillie sur la tige de réglage. Le collet délimite une portion inférieure et une portion supérieure de la tige de réglage, la portion inférieure, située entre le collet et la première extrémité, étant filetée et coopérant avec l'écrou de l'embase, tandis que la portion supérieure, située entre le collet et la deuxième extrémité, présente une empreinte, ménagée au voisinage de la deuxième extrémité, prévue pour visser ou dévisser la tige de réglage dans l'écrou à l'aide d'un outil. Le collet présente une face d'appui, qui est orientée vers l'extrémité supérieure et qui est prévue pour être en appui sur une face inférieure d'un panneau du plancher, l'empreinte étant configurée pour être alignée avec un trou traversant du panneau. Selon l'invention, le bloc élastique (802) est destiné à être en appui sur un fond (22) d'une caisse (2) du véhicule, alors que le plot de nivellement comprend une pièce de guidage, qui est guidée en translation par rapport à l'embase suivant une direction parallèle à l'axe de réglage, la pièce de guidage étant destinée à être fixée sur la face inférieure du panneau de manière à empêcher les mouvements de rotation de l'embase lorsque la tige de réglage est vissée dans ou dévissée de l'écrou.

Grâce à l'invention, les mouvements de rotation de l'embase sont bloquées par la pièce de guidage et l'embase se rapproche ou s'éloigne du collet de la tige de réglage lorsque la tige de réglage est respectivement vissée ou dévissée dans l'écrou. L'embase ne doit plus être collée sur le fond de la caisse, avec tous les inconvénients que cela crée en terme de temps d'attente ou de dégagement de composés organiques volatils. Les plots de nivellement sont pré-montés sur les panneaux avant de disposer les panneaux sur le fond de la caisse, ce qui est une source de gain de temps.

Selon les aspects avantageux mais non obligatoires de l'invention, un tel plot de nivellement peut incorporer une ou plusieurs des caractéristiques techniques suivantes prises selon toutes combinaisons techniquement admissibles :
- la pièce de guidage comprend au moins un guide d'axe parallèle à l'axe de réglage, qui coopère avec au moins un organe complémentaire respectif de l'embase.
- Le guide est une tige cylindrique, tandis que l'organe complémentaire est un œillet dans lequel coulisse la tige cylindrique.
- La pièce de guidage comprend un corps principal avec des alésages périphériques de fixation au panneau de plancher, le corps principal présentant un orifice central par lequel passe la portion inférieure de la tige de réglage, le corps principal ménageant un volume d'accueil du collet lorsque la pièce de guidage est fixée au panneau.
- La portion supérieure de la tige de réglage est filetée, alors que le plot de nivellement comprend, en outre, une rondelle de blocage avec un alésage taraudé, qui coopère avec la portion supérieure de manière à ménager, entre la face d'appui du collet et une face inférieure de la rondelle de blocage, un espace de réception du panneau de plancher, la rondelle de blocage étant configurée pour être en appui sur une face supérieure du panneau.

Selon un autre aspect, l'invention concerne un plancher de véhicule, notamment ferroviaire, qui comprend un panneau de plancher mis à niveau avec au moins un plot de nivellement tel que décrit précédemment. Selon des aspects avantageux mais non obligatoires de l'invention, un tel plancher de véhicule peut incorporer une ou plusieurs des caractéristiques suivantes prises selon toutes combinaisons techniquement admissibles :
- le panneau comprend un renfoncement ménageant un volume d'accueil de la rondelle de blocage, le renfoncement étant ménagé sur la face supérieure du panneau coaxialement au trou traversant du panneau.
- La face supérieure de la rondelle de blocage est affleurante avec la face supérieure du panneau, alors que la portion supérieure de la tige de réglage présente une longueur égale à une épaisseur du panneau de plancher.

L'invention concerne aussi une caisse de véhicule, notamment ferroviaire, qui comprend des panneaux de plancher montés sur le fond de la caisse au moyen de plots de nivellement tel que décrit précédemment.

L'invention concerne également un procédé de montage d'un plancher de véhicule, notamment ferroviaire tel que décrit précédemment, ce procédé comprenant les étapes consistant à :
a) assembler le plot de nivellement sous la face inférieure du panneau, la pièce de guidage étant fixée sous la face inférieure du panneau, la portion inférieure de la tige de réglage coopérant avec l'écrou de l'embase et, conjointement, passant par l'orifice central du corps principal, le collet étant logé dans le volume d'accueil et la portion supérieure de la tige de réglage passant par le trou traversant du panneau, tandis que les guides de la pièce de guidage coopèrent avec les œillets de l'embase,
b) placer le panneau sur le fond de la caisse, les plots de nivellement étant situés entre le panneau et le fond,
c) pour chaque plot de nivellement, ajuster la hauteur du plot de nivellement en vissant ou dévissant la tige de réglage dans l'écrou de l'embase au moyen d'un outil coopérant avec l'empreinte,
d) bloquer la tige de réglage en vissant la rondelle de blocage sur la portion supérieure de la tige de réglage jusqu'à ce que la rondelle de blocage soit serrée sur le panneau.

Ce procédé induit les mêmes avantages que ceux mentionnés au titre du plot de nivellement de l'invention.

L'invention sera mieux comprise et d'autres avantages de celle-ci apparaîtront plus clairement à la lumière de la description qui va suivre, d'un plot de nivellement conforme à un mode de réalisation de l'invention, d'un plancher de véhicule et d'une caisse de véhicule comprenant un tel plot, ainsi que d'un procédé de montage conformes à son principe, donnée uniquement à titre d'exemple et faite en référence aux dessins annexés, dans lesquels :
[Fig 1] La figure 1 est une vue en perspective d'un écorché d'une caisse de véhicule ferroviaire conforme à l'invention, cette caisse comprenant un plancher mis à niveau avec des plots de nivellement conforme à l'invention ;
[Fig 2] La figure 2 est une vue en perspective éclatée d'un plot de nivellement de la figure 1 ;
[Fig 3] La figure 3 est une coupe du plot de nivellement de la figure 2, représenté dans une configuration assemblée.

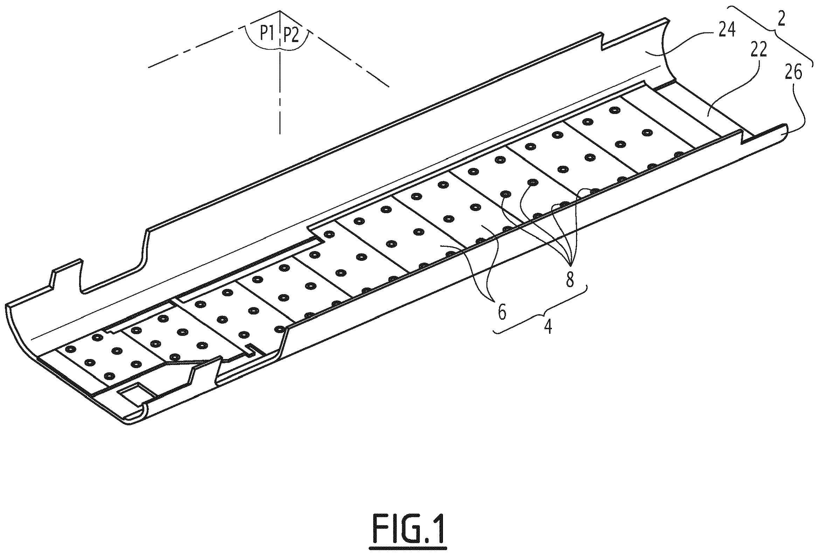

Une caisse 2 de véhicule de transport public, notamment ferroviaire, est partiellement représentée sur la figure 1. La caisse 2 appartient à une voiture pour passagers de train et comprend un fond 22, qui relie deux parois latérales 24 et 26. En variante, le véhicule est un bus ou un car.

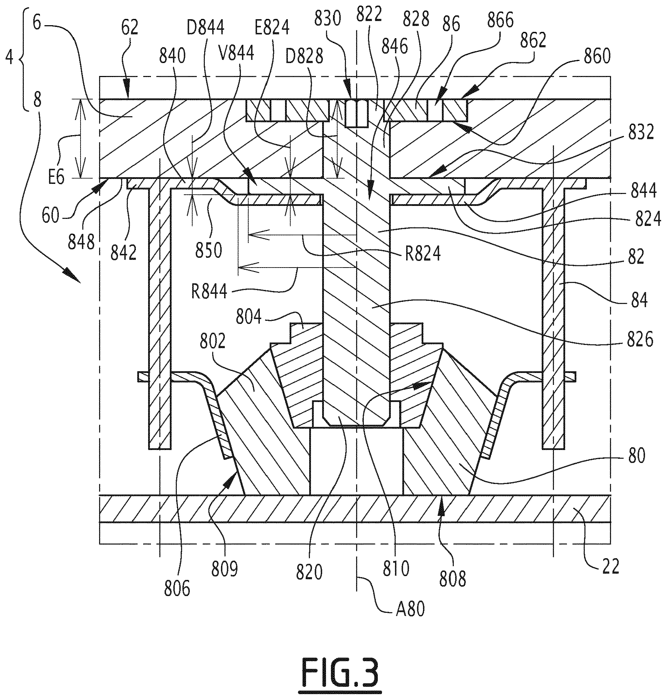

Le fond 22 définit une surface plane, qui est horizontale lorsque le véhicule ferroviaire circule sur une voie horizontale. La caisse 2 représentée sur les figures 1 et 3 est présumée posée sur une surface horizontale. La caisse 2 s'étend dans sa longueur selon une direction longitudinale.

On définit un plan longitudinal P1 comme étant un plan vertical parallèle à la direction longitudinale de la caisse 2. On définit aussi un plan transversal P2 comme étant un plan vertical orthogonal au plan longitudinal P1.

Dans l'exemple illustré, les parois latérales 24 et 26 sont formées de profilés métalliques, qui s'étendent dans leur longueur parallèlement à la direction longitudinale de la caisse 2 et sont assemblés les uns aux autres. Le fond 22 est ici formé de profilés qui s'étendent parallèlement à une direction transversale de la caisse 2, c'est-à-dire parallèlement à une direction orthogonale au plan longitudinal P1.

On comprend que le fond 22 ainsi formé est assemblé aux parois latérales 24 et 26 et présente des défauts géométriques à l'issu de la fabrication de la caisse 2.

La caisse 2 comprend, en outre, un plancher 4, qui est monté sur le fond 22 de la caisse 2. Le plancher 4 comprend des panneaux 6, qui sont reliés à la caisse par l'intermédiaire de plots de nivellement 8. Plus précisément, chacun des panneaux 6 est mis à niveau avec plusieurs plots de nivellement 8, de manière que le plancher 4 forme une surface plane lorsque tous les panneaux 6 sont mis à niveau.

La structure des plots de nivellement 8 est détaillée plus loin dans la présente description.

Dans l'exemple illustré, chacun des panneaux 6 est mis à niveau au moyen de six plots de nivellement 8. Certain des panneaux 6 présentent, en outre, des découpes de manière à laisser passer d'autres équipements du véhicule ferroviaire, qui ne sont pas détaillés ici.

Lorsqu'un panneau 6 ne présente pas de découpes, le panneau 6 a une forme rectangulaire, disposé avec sa plus grande longueur transversale à la caisse 2.

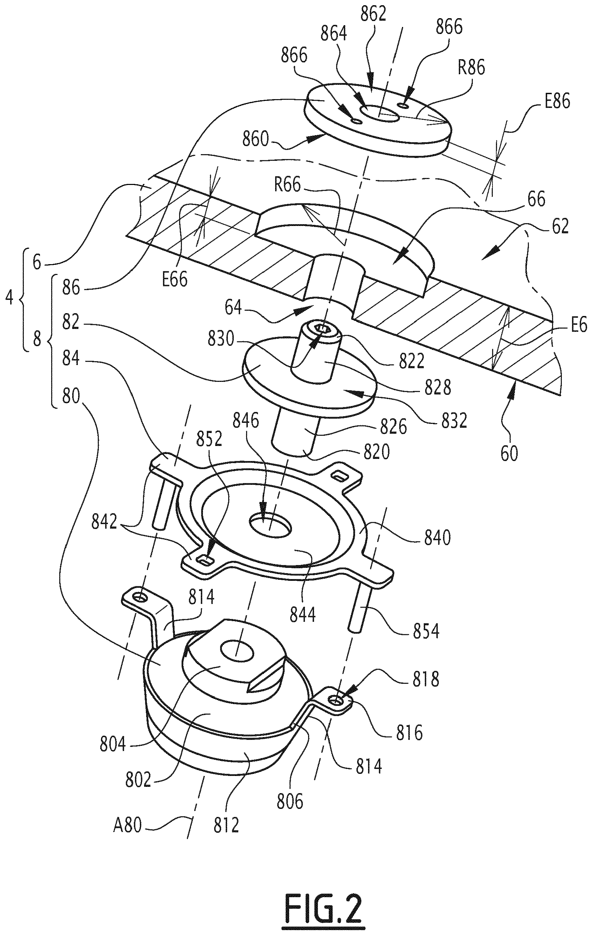

Avantageusement, les plots de nivellement 8 présentent chacun la même structure. Par commodité, un seul plot de nivellement 8 est décrit dans la suite, à l'aide des figures 2 et 3.

Le plot de nivellement 8 de la figure 2 comprend une embase 80, une tige de réglage 82, une pièce de guidage 84 et une rondelle de blocage 86.

L'embase 80 comprend un bloc élastique 802, un écrou 804 et une chemise 806. Le bloc élastique 802 est réalisé en un matériau absorbeur de vibrations, tel qu'un élastomère, et présente une face inférieure 808 en appui sur le fond 22 de la caisse 2, comme représenté sur la figure 3. Dans l'exemple illustré, le bloc élastique 802 présente globalement une forme torique centrée sur un axe de réglage A80. La section du tore, visible sur la figure 3, est ici un polygone irrégulier qui comprend un segment horizontal correspondant à la face inférieure 808 du bloc élastique 802 et un segment oblique qui définit une surface d'appui 810, de forme tronconique centrée sur l'axe de réglage A80 et convergente en direction du fond 22. L'axe de réglage A80 est orthogonal au fond 22 de la caisse 2.

L'écrou 804 présente une forme complémentaire de la surface d'appui 810 du bloc élastique 802 et est solidaire du bloc élastique 802. L'écrou 804 présente un alésage taraudé centré sur l'axe de réglage A80. On comprend que l'écrou 804 n'est pas en contact direct avec le fond 22 de la caisse 2, mais est séparé de la caisse 2 par le bloc élastique 802, évitant la transmission des vibrations de la caisse 2 à l'écrou 804.

La chemise 806, réalisée de préférence en métal, comprend un corps 812 et deux pattes 814.

Le corps 812 présente ici une forme tronconique, qui coopère avec une surface périphérique 809 du bloc élastique 802, la chemise 806 étant solidaire du bloc élastique 802.

Les deux pattes 814 sont disposées de façon diamétralement opposées par rapport à l'axe de réglage A80. Elles sont reliées par une première extrémité au corps 812 et présentent chacune, à une deuxième extrémité opposée de la première extrémité, une zone terminale 816 dans laquelle est ménagé un œillet 818. Les œillets 818 sont chacun centrés sur un axe respectif parallèle à l'axe de réglage A80.

On décrit à présent la tige de réglage 82.

La tige de réglage 82 présente une forme cylindrique de section circulaire centrée sur l'axe de réglage A80. La tige 82 comprend une extrémité inférieure 820 et une extrémité supérieure 822, opposée de l'extrémité inférieure 820.

Dans la présente description, les termes de « haut », « bas », inférieur », « supérieur », etc., sont relatifs à l'orientation des pièces telles que représentées sur les figures, et ne préjuge pas d'un quelconque fonctionnement particulier des pièces.

La tige 82 comprend un collet 824, qui présente une forme de disque centré sur l'axe de réglage A80 ménagé en saillie sur la tige de réglage 82 entre les extrémités inférieures 820 et supérieures 822. Le collet 824 présente un rayon R824, mesuré radialement à l'axe A80, et une épaisseur E824, mesurée parallèlement à l'axe A80. Le collet 824 délimite une portion inférieure 826 de la tige 82 entre le collet 824 et l'extrémité inférieure 820, ainsi qu'une portion supérieure 828 entre le collet 824 et l'extrémité supérieure 822.

Les portions inférieures 826 et supérieures 828 sont filetées, l'extrémité supérieure 822 comprenant, en outre, une empreinte 830 réalisée en creux et destinée à coopérer avec un outil non représenté, de manière qu'un opérateur puisse faire tourner la tige de réglage 82 autour de l'axe A80 dans le sens de son choix.

Dans l'exemple illustré, l'empreinte 830 est une empreinte à six pans creux et l'outil est une clef mâle à six pans. Selon d'autres exemples l'empreinte 830 est une empreinte à six lobes analogue aux empreintes dites « Torx ».

Le filetage de la portion inférieure 826 est complémentaire du taraudage de l'écrou 804.

Le collet 824 présente une face d'appui 832, qui est orientée vers l'extrémité supérieure 822.

On définit aussi une longueur D828 de la portion supérieure 828 comme étant la distance entre la face d'appui 832 et l'extrémité supérieure 822, mesurée parallèlement à l'axe de réglage A80.

On décrit à présent la pièce de guidage 84.

La pièce de guidage 84 comprend un corps principal 840, qui a une forme de coupelle centrée sur l'axe de réglage A80, est réalisé dans une plaque, par exemple métallique, et est produit, par exemple, par emboutissage.

Le corps principal 840 comprend quatre pattes périphériques 842 et un fond 844. Les pattes 842 sont réparties régulièrement radialement à l'axe de réglage A80 à la périphérie du corps principal 840, et définissent ensemble un premier plan 848, orthogonal à l'axe de réglage A80.

Le fond 844, en forme de disque de rayon R844, présente un orifice central 846 d'axe A80. Le fond 844 définit un deuxième plan 850, qui est parallèle au premier plan 848 et est décalé du premier plan d'une distance D844, mesurée parallèlement à l'axe de réglage A80.

Le corps principal 840 ménage un volume d'accueil V844 du collet 824, la portion inférieure 826 de la tige de réglage 82 passant par l'orifice central 846.

Deux des pattes périphériques 842, diamétralement opposées par rapport à l'axe de réglage A80, présentent un alésage 852, d'axe parallèle à l'axe A80, tandis que les deux autres pattes périphériques 842 qui ne comportent pas d'alésage 852 portent chacune un guide 854.

Les guides 854 sont ici des tiges cylindriques, ayant chacune un axe respectif parallèle à l'axe de réglage A80, et sont situés du même côté du premier plan 848 tourné vers l'embase 80. Chacun des guides 854 coulisse dans un des œillets 818 respectif, de manière à guider en translation la pièce de guidage 84 par rapport à l'embase 80 suivant une direction parallèle à l'axe de réglage A80. On comprend que le guidage en translation de la pièce de guidage 84 par rapport à l'embase 80 peut être réalisé avec des guides présentant d'autres formes que les guides 854 de l'exemple illustré, coopérant avec des organes complémentaires différents des œillets 818.

Le panneau 6, visible en perspective sur la figure 2 et en coupe sur la figure 3, présente une face inférieure 60, orientée vers le fond 22 de la caisse 2, et une face supérieure 62, opposée à la face inférieure 60. Les faces inférieure et supérieure 60 et 62 sont parallèles, et définissent entres-elles une épaisseur E6 du panneau 6.

Le panneau 6 comprend, en outre, un trou traversant 64, de section circulaire centrée sur l'axe de réglage A80. Le panneau 6 présente, du côté de la face supérieure 62, un renfoncement, plus particulièrement un lamage, de forme circulaire et centré sur l'axe de réglage A80, le renfoncement comprenant un fond 66. Le fond 66 a une forme de couronne circulaire et est situé dans un plan orthogonal à l'axe de réglage A80. On définit une profondeur E66 du renfoncement comme étant la distance entre la face supérieure 62 et le fond 66, mesurée parallèlement à l'axe de réglage A80. On définit aussi un rayon R66 comme étant un rayon du fond 66 mesuré radialement à l'axe de réglage A80.

La rondelle de blocage 86 présente une forme de disque centré sur l'axe de réglage A80 et définissant un rayon R86, mesuré radialement à l'axe A80. La rondelle de blocage 86 présente une face inférieure 860 et une face supérieure 862, qui sont parallèles l'une à l'autre et définissent entre-elles une épaisseur E86 de la rondelle de blocage 86. La rondelle de blocage 86 comprend aussi un alésage central 864, qui est taraudé et est prévu pour coopérer avec la portion supérieure 828 de la tige de réglage 82.

La rondelle de blocage 86 comprend, en outre, deux orifices 866, qui débouchent sur la face supérieure 862 et sont diamétralement opposés par rapport à l'axe de réglage A80. Les orifices 866 sont prévus pour coopérer avec un outil non représenté, afin qu'un utilisateur puisse visser ou dévisser la rondelle de blocage 86 sur la portion supérieure 828 de la tige de réglage 82.

Sur la figure 3, dans laquelle le plot est en configuration assemblée, la pièce de guidage 84 est fixée sur le panneau 6. Plus précisément, les pattes périphériques 842 sont en appui sur la face inférieure 60 du panneau 6, et des organes de fixation, non représentés, coopèrent avec les alésages 852 pour fixer la pièce de guidage 84 au panneau 6. En pratique, ces organes de fixation peuvent être des vis, qui traversent les alésages 852 et sont vissées dans la face inférieure 60 du panneau 6. Dans la configuration assemblée, le collet 824 de la tige de réglage est logé dans le volume d'accueil V844 de manière à empêcher les mouvements de translation de la tige 82 par rapport au panneau 6 tout en autorisant les mouvements de rotation de la tige de réglage 82 autour de l'axe A80. On comprend que la distance D844 du renfoncement 844 est égale, au jeu d'assemblage près, à l'épaisseur E824 du collet 824. De façon analogue, le rayon R844 du renfoncement 844 est supérieur ou égal au rayon R824 du collet 824.

Dans la configuration assemblée, la tige de réglage 82 est alignée avec le trou traversant 64 du panneau, de manière à ce qu'un utilisateur puisse accéder à l'empreinte 830 de la tige de réglage 82 pour visser ou dévisser la tige 82 dans l'écrou 804 à l'aide d'un outil.

Avantageusement, la portion supérieure 828 de la tige de 82 est logée dans le trou traversant 64 du panneau 6, l'extrémité supérieure 822 étant affleurante avec la face supérieure 62 du panneau 6. Plus précisément, la longueur D828 de la portion supérieure 828 est égale à l'épaisseur E6 du panneau 6.

Les guides 854, coopérant avec les œillets 818, empêchent les mouvements de rotation de l'embase 80 par rapport à la pièce de guidage 84 et par rapport au panneau 6 sur lequel la pièce 84 est fixée. De façon analogue, seuls les mouvements de translation de l'embase 80 par rapport à la pièce de guidage 84, et donc par rapport au panneau 6, sont autorisés. On comprend que les mouvements de rotation de la tige de réglage 82, dont la portion inférieure 826 coopère avec l'écrou 804 de l'embase, se traduisent par des mouvements de translation de l'embase 80 parallèlement à l'axe de réglage A80. Les guides 854 de la pièce de guidage 84, coopérant avec les œillets 818, évitent que l'embase 80 ne tourne « à vide » lorsque la tige de réglage 82 est vissée ou dévissée par un opérateur.

L'opérateur peut ainsi, par vissage ou dévissage de la tige de réglage 82, rapprocher ou éloigner l'embase 80 du collet 824. Autrement dit l'opérateur peut régler la hauteur du plot de nivellement 8.

Lorsque la rondelle de blocage 86 est vissée sur la portion supérieure 828 de la tige 82 et que la face inférieure 860 de la rondelle 86 est en appui serré sur le fond 66 du renfoncement du panneau 6, les mouvements intempestifs de rotation de la tige de réglage 82 par rapport au panneau 6 sont empêchés. La rondelle de blocage 86 est alors dans une configuration dite bloquée.

Avantageusement, l'épaisseur E86 est égale à la profondeur E66 du renfoncement du panneau 6, ce qui fait que dans la configuration bloquée, la face supérieure 862 de la rondelle de blocage 86 est affleurante avec la face supérieure 62 du panneau 6.

On décrit à présent un procédé de montage du plancher 4.

Dans une étape a), la pièce de guidage 84 est fixée sous la face inférieure 60 du panneau 6, la portion supérieure 828 de la tige 82 passant par le trou traversant 64 du panneau 6, la portion inférieure 826 de la tige 82 passant par l'orifice central 846 de la pièce de guidage 84 et le collet 824 étant logé dans le renfoncement 844 de la pièce de guidage 84. L'embase 80 est mise en place de manière que les guides 854 coopèrent avec les œillets 818 et que, conjointement, la portion inférieure 826 coopère avec l'écrou 804 de l'embase 80.

À l'issue de l'étape a), l'embase 80, la tige de réglage 82 et la pièce de guidage 84 sont positionnées sous la face inférieure 60 du panneau 6, le panneau 6 pouvant être déplacé par un opérateur.

Dans une étape b) du procédé de montage, le panneau 6 est placé sur le fond 22 de la caisse 2, les plots de nivellement étant situés entre le panneau 6 et le fond 22. Le fond 22 de la caisse 2 n'étant pas parfaitement plan, les embases 80 de certains de plots de nivellement 8 sont en appui sur le fond 22, tandis que les embases d'autres plots 8 ne sont pas en contact avec le fond 22.

Dans une étape c), l'opérateur ajuste si besoin la hauteur de chaque plot de nivellement 8 en vissant ou dévissant la tige de réglage 82 dans l'écrou 804 au moyen d'un outil coopérant avec l'empreinte 830, jusqu'à ce que le panneau 6 soit dans la position souhaitée. À l'issue de l'étape c), les panneaux 6 de la caisse 2 sont coplanaires, de façon que le plancher 2 est plan, et horizontal lorsque la caisse 2 est horizontale.

Dans une étape d), l'opérateur bloque la tige de réglage 82 en vissant la rondelle de blocage 86 sur la portion supérieure 828 de la tige 82, jusqu'à ce que la rondelle de blocage 86 soit serrée sur le panneau 6. À l'issue de l'étape d), la face supérieure 862 de la rondelle 86 est affleurante avec la face supérieure 62 du panneau 6.

Le mode de réalisation et les variantes mentionnées ci-dessus peuvent être combinés entre eux pour générer de nouveaux modes de réalisation de l'invention.

## Revendications

1. Plot de nivellement (8) pour plancher (4) de véhicule, notamment ferroviaire, le plot de nivellement comprenant une embase (80) et une tige de réglage (82), dans lequel :
- l'embase comprend un bloc élastique (802), réalisé en un matériau absorbeur de vibrations, et un écrou (804), solidaire du bloc élastique, le bloc élastique séparant l'écrou de la caisse, l'écrou définissant un axe de réglage (A80) du plot de nivellement,
- la tige de réglage (82) comprend une extrémité inférieure (820) et une extrémité supérieure (822), séparées par un collet (824) intermédiaire ménagé en saillie sur la tige de réglage, le collet délimitant une portion inférieure (826) et une portion supérieure (828) de la tige de réglage, la portion inférieure, située entre le collet et la première extrémité, étant filetée et coopérant avec l'écrou de l'embase, tandis que la portion supérieure, située entre le collet et la deuxième extrémité, présente une empreinte (830), ménagée au voisinage de la deuxième extrémité, prévue pour visser ou dévisser la tige de réglage (82) dans l'écrou (804) à l'aide d'un outil,
tandis que le collet (824) présente une face d'appui (832), qui est orientée vers l'extrémité supérieure et qui est prévue pour être en appui sur une face inférieure (60) d'un panneau (6) du plancher (4), l'empreinte (830) étant configurée pour être alignée avec un trou traversant (64) du panneau,
**caractérisé en ce que** le bloc élastique (802) est destiné à être en appui sur un fond (22) d'une caisse (2) du véhicule, et
**en ce que** le plot de nivellement (8) comprend une pièce de guidage (84), qui est guidée en translation par rapport à l'embase (80) suivant une direction parallèle à l'axe de réglage (A80), la pièce de guidage étant destinée à être fixée sur la face inférieure (60) du panneau de manière à empêcher les mouvements de rotation de l'embase (80) lorsque la tige de réglage (82) est vissée dans ou dévissée de l'écrou (804).

2. Plot de nivellement (8) selon la revendication précédente, **caractérisé en ce que** la pièce de guidage (84) comprend au moins un guide (854) d'axe parallèle à l'axe de réglage (A80), qui coopère avec au moins un organe complémentaire (818) respectif de l'embase (80).

3. Plot de nivellement (8) selon la revendication précédente, **caractérisé en ce que** le guide (854) est une tige cylindrique, tandis que l'organe complémentaire (818) est un œillet dans lequel coulisse la tige cylindrique.

4. Plot de nivellement (8) selon l'une quelconque des revendications 1 à 3, **caractérisé en ce que** la pièce de guidage (84) comprend un corps principal (840) avec des alésages (852) périphériques de fixation au panneau (6) de plancher (4), le corps principal présentant un orifice central (846) par lequel passe la portion inférieure (826) de la tige de réglage (82), le corps principal ménageant un volume d'accueil (V844) du collet (824) lorsque la pièce de guidage est fixée au panneau (6).

5. Plot de nivellement (8) selon l'une quelconque des revendications précédentes, **caractérisé en ce que** la portion supérieure (828) de la tige de réglage (82) est filetée, le plot de nivellement comprenant, en outre, une rondelle de blocage (86) avec un alésage (864) taraudé, qui coopère avec la portion supérieure (828) de manière à ménager, entre la face d'appui (832) du collet (824) et une face inférieure (860) de la rondelle de blocage, un espace de réception du panneau (6) de plancher, la rondelle de blocage étant configurée pour être en appui sur une face supérieure (62) du panneau.

6. Plancher (4) de véhicule, notamment ferroviaire, comprenant au moins un panneau (6) de plancher mis à niveau avec des plots de nivellement, **caractérisé en ce qu'**au moins un des plots de nivellement (8) est selon l'une quelconque des revendications précédentes.

7. Plancher (4) de véhicule, notamment ferroviaire, selon la revendication précédente, **caractérisé en ce que** le plot de nivellement (8) est selon la revendication 5, et **en ce que** le panneau (6) comprend un renfoncement ménageant un volume d'accueil de la rondelle de blocage (86), le renfoncement étant ménagé sur la face supérieure (62) du panneau coaxialement au trou traversant (64) du panneau.

8. Plancher (4) de véhicule, notamment ferroviaire, selon la revendication précédente, **caractérisé en ce que** la face supérieure (862) de la rondelle de blocage (86) est affleurante avec la face supérieure (62) du panneau (6) et **en ce que** la portion supérieure (828) de la tige de réglage (82) présente une longueur (D828) égale à une épaisseur (E6) du panneau (6) de plancher.

9. Caisse (2) de véhicule, notamment ferroviaire, comprenant un plancher (4) monté sur le fond (22) de la caisse, **caractérisé en ce que** le plancher est selon l'une quelconque des revendications 6 à 8.

10. Procédé de montage d'un plancher (4) de véhicule, notamment ferroviaire, le plancher étant conforme à l'une quelconque des revendications 6 à 8, le procédé de montage comprenant les étapes consistant à :
a) assembler le plot de nivellement (8) sous la face inférieure (60) du panneau (6), la pièce de guidage (84) étant fixée sous la face inférieure (60) du panneau, la portion inférieure (826) de la tige de réglage (82) coopérant avec l'écrou (804) de l'embase (80) et, conjointement, passant par l'orifice central (846) du corps principal (840), le collet (824) étant logé dans le volume d'accueil (V844) et la portion supérieure (828) de la tige de réglage passant par le trou traversant (66) du panneau, tandis que les guides (854) de la pièce de guidage (84) coopèrent avec les œillets (818) de l'embase (80),
b) placer le panneau sur le fond (22) de la caisse (2), les plots de nivellement (8) étant situés entre le panneau et le fond,
c) pour chaque plot de nivellement (8), ajuster la hauteur du plot de nivellement en vissant ou dévissant la tige de réglage (82) dans l'écrou (804) de l'embase (80) au moyen d'un outil coopérant avec l'empreinte (830),
d) bloquer la tige de réglage (82) en vissant la rondelle de blocage (86) sur la portion supérieure (828) de la tige de réglage (82) jusqu'à ce que la rondelle de blocage (86) soit serrée sur le panneau (6).

## Patentansprüche

1. Nivellierblock (8) für einen Boden (4) eines Fahrzeugs, insbesondere eines Schienenfahrzeugs, der Nivellierblock umfassend eine Basis (80) und eine Einstellstange (82), wobei:
- die Basis einen elastischen Block (802), der aus einem vibrationsabsorbierenden Material hergestellt ist, und eine Mutter (804), die fest mit dem elastischen Block verbunden ist, umfasst, wobei der elastische Block die Mutter von dem Wagenkasten trennt, wobei die Mutter eine Einstellachse (A80) des Nivellierblocks definiert,
- die Einstellstange (82) ein unteres Ende (820) und ein oberes Ende (822) umfasst, die durch einen zwischenliegenden Bund (824) getrennt sind, der hervorstehend an der Einstellstange ausgebildet ist, wobei der Bund einen unteren Abschnitt (826) und einen oberen Abschnitt (828) der Einstellstange begrenzt, wobei der untere Abschnitt, der sich zwischen dem Flansch und dem ersten Ende befindet, mit einem Gewinde versehen ist und mit der Mutter der Basis zusammenwirkt, während der obere Abschnitt, der sich zwischen dem Bund und dem zweiten Ende befindet, eine Vertiefung (830) aufweist, die in der Nähe des zweiten Endes ausgebildet ist und bereitgestellt ist, um die Einstellstange (82) mittels eines Werkzeugs in die Mutter (804) einzuschrauben oder herauszuschrauben,
während der Bund (824) eine Anlagefläche (832) aufweist, die dem oberen Ende zugewandt ist und die bereitgestellt ist, um an einer Unterseite (60) einer Platte (6) des Bodens (4) anzuliegen, wobei die Vertiefung (830) konfiguriert ist, um mit einem Durchgangsloch (64) der Platte ausgerichtet zu sein,
**dadurch gekennzeichnet, dass** der elastische Block (802) dazu bestimmt ist, auf einem Boden (22) eines Wagenkastens (2) des Fahrzeugs aufzuliegen, und
dass der Nivellierblock (8) ein Führungsteil (84) umfasst, das in Bezug auf die Basis (80) in einer Richtung parallel zu der Einstellachse (A80) translatorisch geführt wird, wobei das Führungsteil dazu bestimmt ist, an der Unterseite (60) der Platte befestigt zu werden, um die Drehbewegungen der Basis (80) zu verhindern, wenn die Einstellstange (82) in der Mutter (804) eingeschraubt oder daraus herausgeschraubt wird.

2. Nivellierblock (8) nach dem vorherigen Anspruch, **dadurch gekennzeichnet, dass** das Führungsteil (84) mindestens eine Führung (854) mit einer Achse parallel zu der Einstellachse (A80) umfasst, die mit mindestens einem jeweiligen komplementären Organ (818) der Basis (80) zusammenwirkt.

3. Nivellierblock (8) nach dem vorherigen Anspruch, **dadurch gekennzeichnet, dass** die Führung (854) eine zylindrische Stange ist, während das komplementäre Organ (818) eine Öse ist, in der die zylindrische Stange gleitet.

4. Nivellierblock (8) nach einem der Ansprüche 1 bis 3, **dadurch gekennzeichnet, dass** das Führungsteil (84) einen Hauptkörper (840) mit Umfangsbohrungen (852) zur Befestigung an der Platte (6) des Bodens (4) umfasst, wobei der Hauptkörper eine mittlere Öffnung (846) aufweist, durch die der untere Abschnitt (826) der Einstellstange (82) verläuft, wobei der Hauptkörper ein Aufnahmevolumen (V844) für den Bund (824) ausbildet, wenn das Führungsteil an der Platte (6) befestigt ist.

5. Nivellierblock (8) nach einem der vorherigen Ansprüche, **dadurch gekennzeichnet, dass** der obere Abschnitt (828) der Einstellstange (82) mit einem Gewinde versehen ist, der Nivellierblock ferner umfassend eine Sicherungsscheibe (86) mit einer Bohrung (864) mit Gewinde, die mit dem oberen Abschnitt (828) zusammenwirkt, um zwischen der Anlagefläche (832) des Bunds (824) und einer Unterseite (860) der Sicherungsscheibe einen Raum zum Aufnehmen der Bodenplatte (6) auszubilden, wobei die Sicherungsscheibe konfiguriert ist, um auf einer Oberseite (62) der Platte aufzuliegen.

6. Boden (4) eines Fahrzeugs, insbesondere eines Schienenfahrzeugs, umfassend mindestens eine Bodenplatte (6), die mit Nivellierblöcken nivelliert ist, **dadurch gekennzeichnet, dass** mindestens einer der Nivellierblöcke (8) gemäß einem der vorherigen Ansprüche ist.

7. Boden (4) eines Fahrzeugs, insbesondere eines Schienenfahrzeugs, nach dem vorherigen Anspruch, **dadurch gekennzeichnet, dass** der Nivellierblock (8) nach Anspruch 5 ist und dass die Platte (6) eine Vertiefung umfasst, die ein Aufnahmevolumen für die Sicherungsscheibe (86) ausbildet, wobei die Vertiefung auf der Oberseite (62) der Platte koaxial zu dem Durchgangsloch (64) der Platte ausgebildet ist.

8. Boden (4) eines Fahrzeugs, insbesondere eines Schienenfahrzeugs, nach dem vorherigen Anspruch, **dadurch gekennzeichnet, dass** die Oberseite (862) der Sicherungsscheibe (86) bündig mit der Oberseite (62) der Platte (6) ist und dass der obere Abschnitt (828) der Einstellstange (82) eine Länge (D828) aufweist, die gleich wie eine Stärke (E6) der Bodenplatte (6) ist.

9. Wagenkasten (2) eines Fahrzeugs, insbesondere eines Schienenfahrzeugs, umfassend einen Boden (4), der auf dem Boden (22) des Wagenkastens montiert ist, **dadurch gekennzeichnet, dass** der Boden gemäß einem der Ansprüche 6 bis 8 ist.

10. Verfahren zur Montage eines Bodens (4) eines Fahrzeugs, insbesondere eines Schienenfahrzeugs, wobei der Boden einem der Ansprüche 6 bis 8 entspricht, das Montageverfahren umfassend die Schritte, die aus Folgendem bestehen:
a) Zusammensetzen des Nivellierblocks (8) unter der Unterseite (60) der Platte (6), wobei das Führungsstück (84) unter der Unterseite (60) der Platte befestigt ist, der untere Abschnitt (826) der Einstellstange (82) mit der Mutter (804) der Basis (80) zusammenwirkt und zusammen, durch die zentrale Öffnung (846) des Hauptkörpers (840) verläuft, wobei der Bund (824) in dem Aufnahmevolumen (V844) untergebracht ist und der obere Abschnitt (828) der Einstellstange durch das Durchgangsloch (66) der Platte verläuft, während die Führungen (854) des Führungsteils (84) mit den Ösen (818) der Basis (80) zusammenwirken,
b) Platzieren der Platte auf den Boden (22) des Wagenkastens (2), wobei sich die Nivellierblöcke (8) zwischen der Platte und dem Boden befinden,
c) für jeden Nivellierblock (8), Einstellen der Höhe des Nivellierblocks einstellen, indem die Einstellstange (82) mit einem Werkzeug, das mit der Vertiefung (830) zusammenwirkt, in die Mutter (804) der Basis (80) eingeschraubt oder daraus herausgeschraubt wird,
d) Blockieren der Einstellstange (82) durch Schrauben der Sicherungsscheibe (86) auf den oberen Abschnitt (828) der Einstellstange (82), bis die Sicherungsscheibe (86) an der Platte (6) festgezogen ist.

## Claims

1. A pad (8) for levelling the floor (4) of a vehicle, in particular a railway vehicle, the levelling pad comprising a base (80) and an adjustment rod (82), wherein:
- the base comprises a resilient block (802), made of a vibration absorbing material, and a nut (804), integral with the resilient block, the resilient block separating the nut from the body, the nut defining an adjustment axis (A80) of the levelling pad,
- the adjusting rod (82) comprises a lower end (820) and an upper end (822), separated by an intermediate collar (824) provided on the adjusting rod, the collar delimiting a lower portion (826) and an upper portion (828) of the adjusting rod, the lower portion, situated between the collar and the first end, being threaded and cooperating with the nut of the base, while the upper portion, situated between the collar and the second end, has an indentation (830), provided in the vicinity of the second end, intended for screwing or unscrewing the adjusting rod (82) in the nut (804) by means of a tool,
while the collar (824) has an abutment face (832), which is oriented towards the upper end and is intended to about a lower face (60) of a panel (6) of the floor (4), the indentation (830) being configured to be aligned with a through-hole (64) of the panel, **characterised in that** the resilient block (802) is intended to rest on a bottom (22) of a body (2) of the vehicle, and
**in that** the levelling pad (8) comprises a guide part (84), which is guided in translation with respect to the base (80) in a direction parallel to the adjustment axis (A80), the guide part being intended to be fixed to the underside (60) of the panel in such a way as to prevent rotational movements of the base (80) when the adjustment rod (82) is screwed into or unscrewed from the nut (804).

2. A levelling pad (8) according to the preceding claim, **characterised in that** the guide part (84) comprises at least one guide (854) with an axis parallel to the adjustment axis (A80), which cooperates with at least one respective complementary member (818) of the base (80).

3. The levelling pad (8) according to the preceding claim, **characterised in that** the guide (854) is a cylindrical rod, while the complementary member (818) is an eyelet through which the cylindrical rod slides.

4. The levelling pad (8) according to any one of claims 1 to 3, **characterised in that** the guide part (84) comprises a main body (840) with peripheral bores (852) for fixing to the panel (6) of the floor (4), the main body having a central orifice (846) through which the lower portion (826) of the adjusting rod (82) passes, the main body providing a volume (V844) for accommodating the collar (824) when the guide part is fixed to the panel (6).

5. The levelling pad (8) according to any of the preceding claims, **characterised in that** the upper portion (828) of the adjusting rod (82) is threaded, the levelling pad further comprising a lock washer (86) with a threaded bore (864) which cooperates with the upper portion (828) so as to provide, between the abutment face (832) of the collar (824) and a lower face (860) of the lock washer, a space for receiving the floor panel (6), the lock washer being configured to abut an upper face (62) of the panel.

6. A vehicle floor (4), in particular of a railway vehicle, comprising at least one floor panel (6) levelled with levelling pads, **characterised in that** at least one of the levelling pads (8) is according to any one of the preceding claims.

7. The vehicle floor (4), in particular of a railway vehicle, according to the preceding claim, **characterised in that** the levelling pad (8) is according to claim 5, and **in that** the panel (6) comprises a recess providing a volume for receiving the lock washer (86), the recess being provided on the upper face (62) of the panel coaxially with the through-hole (64) of the panel.

8. The vehicle floor (4), in particular of a railway vehicle, according to the preceding claim, **characterised in that** the upper face (862) of the lock washer (86) is flush with the upper face (62) of the panel (6) and **in that** the upper portion (828) of the adjustment rod (82) has a length (D828) equal to a thickness (E6) of the floor panel (6).

9. A vehicle body (2), in particular of a railway vehicle, comprising a floor (4) mounted on the bottom (22) of the body, **characterised in that** the floor is according to any one of claims 6 to 8.

10. A method for installing a vehicle floor (4), in particular of a railway vehicle, the floor being according to any of claims 6 to 8, the installation method comprising the steps consisting of:
a) assembling the levelling pad (8) under the underside (60) of the panel (6), the guide part (84) being fixed under the underside (60) of the panel, the lower portion (826) of the adjusting rod (82) cooperating with the nut (804) of the base (80) and, together, passing through the central hole (846) of the main body (840), the collar (824) being housed in the receiving volume (V844) and the upper portion (828) of the adjusting rod passing through the through-hole (66) of the panel, while the guides (854) of the guide part (84) cooperate with the eyelets (818) of the base (80),
b) placing the panel on the bottom (22) of the box (2) with the levelling pads (8) between the panel and the bottom,
c) for each levelling pad (8), adjusting the height of the levelling pad by screwing or unscrewing the adjusting rod (82) in the nut (804) of the base (80) by means of a tool cooperating with the indentation (830),
d) locking the adjusting rod (82) by screwing the lock washer (86) onto the upper portion (828) of the adjusting rod (82) until the lock washer (86) is tight on the panel (6).
